# EUROPÄISCHE PATENTSCHRIFT

(11) **EP 2 060 421 B1**
(45) Veröffentlichungstag und Bekanntmachung des Hinweises auf die Patenterteilung: **27.10.2010**
(21) Anmeldenummer: 08018219.9
(22) Anmeldetag: 17.10.2008
(51) Int. Cl.: B60J 1/20

(54) **Rolloanordnung mit verminderter Reibung im Antrieb**
Shutter arrangement with lower friction in the drive
Agencement de store doté d'un entraînement à friction réduite

(30) Priorität: 14.11.2007 DE 102007054694
(43) Veröffentlichungstag der Anmeldung: 20.05.2009
(73) Patentinhaber: BOS GmbH & Co. KG, 73760 Ostfildern (DE)
(72) Erfinder: Lingemann, Gerald, 71394 Kernen i. R. (DE)
(74) Vertreter: Rüger, Barthelt & Abel Patentanwälte

(56) Entgegenhaltungen:
- EP-A- 1 129 871
- EP-A- 1 306 251
- EP-A- 1 619 057

## Beschreibung

Gelegentlich müssen bei Fahrzeugen zwei Rollos eines Fensters gemeinsam über eine Antriebseinrichtung angetrieben werden. Ein Beispiel für eine solche Beschattungsanordnung findet sich beispielsweise an den hinteren Seitenfenstern. Diese sind in einem im Wesentlichen rechteckigen Teil und einen etwa dreieckförmigen Teil unterteilt. In dem rechteckigen Teil befindet sich die versenkbare Scheibe der Seitentür während der dreieckförmige Teil starr ist. Die beiden Abschnitte des Fensters werden durch eine Fensterstrebe voneinander getrennt.

Die Rolloanordnungen, die für solche Seitenfenster vorgesehen sind, bestehen aus einer horizontalen Wickelwelle für den rechteckigen Teil und einer vertikal angeordneten Wickelwelle für den dreieckförmigen Teil. Die Wickelwelle für den dreieckförmigen Teil befindet sich bei der Fensterstrebe.

Die Rollobahn für das horizontale Fenster ist mit einem Zugstab verbunden, der beidends in Führungsschienen geführt ist. Diese Führungsschiene dienen gleichzeitig zur ausknicksicheren Führung von linienförmigen Schubgliedern. Diese laufen in Führungsrohren zu einer Antriebseinrichtung in Gestalt eines Getriebemotors mit Stirnzahnrad auf der Ausgangswelle. Das Stirnzahnrad kämmt mit der Verzahnung der linienförmigen Schubglieder. Für das nichtbenutzte Leertrum jedes Schubglieds ist zusätzlich noch ein Speicherrohr vorhanden.

Der Zugstab des dreieckförmigen Rollos ist einends in einer Führungsschiene geführt, die ebenfalls horizontal unterhalb der Fensterbrüstung verläuft. Bei den bekannten Anordnungen führt von dieser Führungsschiene ein s- oder Z-förmig gekrümmtes Führungsrohr zu demselben Antriebsmotor, um den Antrieb für das dreieckförmige Rollo zu erreichen.

Während die Führungsrohre für das rechteckige Fensterrollo nur eine Krümmung aufweisen und demzufolge relativ wenig Reibung erzeugen, verläuft das Führungsrohr für das dreieckförmige Fenster wegen der doppelten gegenseitigen Krümmung sehr kompliziert und erzeugt extrem viel Reibung.

Die EP 1 306 251 A offenbart eine Fensterrolloanordnung gemäß dem Oberbegriff des Anspruchs 1.

Ausgehend hiervon ist es Aufgabe der Erfindung eine Rolloanordnung zu schaffen, bei der weniger verlustreibung auftritt.

Diese Aufgabe wird erfindungsgemäß durch die Rolloanordnung mit den Merkmalen des Anspruches 1 gelöst.

Zu der neuen Fensterrolloanordnung gehören eine erste und eine zweite Wickelwelle, die, jede für sich, drehbar gelagert sind. Mit der ersten Wickelwelle ist eine erste Rollobahn verbunden, deren freie Kante an einem zugehörigen ersten Zugstab befestigt ist. Die zweite Rollobahn ist an der zweiten Wickelwelle verankert und ebenfalls mit einem zugehörigen zweiten Zugstab verbunden. Um die erste Rollobahn zu bewegen ist eine Antriebseinrichtung mit Ausgangszahnrad vorgesehen, das mit wenigstens einem ersten linienförmigen Antriebsmittel formschlüssig kämmt. Dadurch kann die erste Rollobahn mit Hilfe des Antriebsmittels über die Antriebseinrichtung bewegt werden.

Die Bewegung für die zweite Rollobahn wird aus der Bewegung des ersten linienförmigen Antriebmittels abgeleitet. Hierzu ist das erste linienförmige Antriebsmittel getrieblich mit einer lose drehbaren Zahnradanordnung gekuppelt mit der auch ein zweites linienförmiges Antriebsmittel kämmt.

Dieses neue erfinderische Konzept ermöglicht es, ein weiteres langes Führungsrohr einzusparen, das sonst erforderlich wäre, um das zweite linienförmige Antriebsmittel bis zur Antriebseinrichtung zu führen.

Übertragen auf ein Seitenfenster bei einem Kraftfahrzeug kann die Anordnung beispielsweise derart gestaltet sein, dass die erste Rollobahn der Rollobahn für das viereckige Fenster entspricht, wobei der Zugstab in zwei endseitigen Führungsschienen geführt ist. Jede Führungsschiene führt ein erstes linienförmiges Antriebsmittel, das über ein Führungsrohr bis hin zur Antriebseinrichtung geführt ist. Die Bewegung für das dreieckförmige Rollo wird aus der Bewegung jenes Schubglieds abgeleitet, dass bei der Fensterstrebe läuft, die die beiden Fensterabschnitte voneinander trennt. Die Bewegung des dreieckförmigen Rollos geschieht über ein linienförmiges Antriebsmittel, das auf diese Weise nur mittelbar mit der Antriebseinrichtung gekuppelt ist. Die Führungsschiene für das dreieckförmige Rollo verläuft horizontal unterhalb der Fensterunterkante und somit im rechten Winkel zu der Führungsschiene an der Fensterstrebe.

Die Zahnradanordnung sitzt in der Innenecke an der Stelle, an der sich das linienförmige Antriebsmittel für das dreieckförmige Rollo mit dem linienförmigen Antriebsmittel, das bei der Fensterstrebe geführt ist, schneiden.

Aus diesem Grund ist kein langes Führungsrohr für das dreieckförmige Fensterrollo mehr erforderlich. Das Antriebsmittel für das dreieckförmige Rollo läuft im Wesentlichen nur horizontal, so dass hier praktisch keine nennenswerten Reibungskräfte auftreten. Insbesondere ist der Hub für das dreieckförmige Fensterrollo deutlich kürzer als die Breite des viereckigen Rollos, womit es möglich ist, unmittelbar in der Verlängerung der Führungsschiene für das dreieckförmige Fensterrollo auch das Speicherrohr unterzubringen. Die Reibungskräfte sind deutlich vermindert. Außerdem ist der Fertigungsaufwand wesentlich reduziert, weil kein weiteres Führungsrohr gebogen werden muss, das nach dem Stand der Technik die Führungsschiene für das dreieckförmige Fensterrollo mit der Antriebseinrichtung verbindet.

Die erfindungsgemäße Anordnung eignet sich insbesondere, wie sich aus der obigen Erläuterung ergibt, für Fensterrolloanordnungen, bei denen die Wickelwelle im Winkel zueinander angeordnet sind.

Die Antriebseinrichtung kann von einem elektrischen Getriebemotor gebildet sein, wobei das Ausgangszahnrad auf der Ausgangswelle des Getriebemotors drehfest sitzt.

Die linienförmigen Antriebmittel können die Gestalt einer Zahnstange haben. Vorteilhafterweise handelt sich um eine rundumverzahnte Zahnstange, beispielsweise eine schräg verzahnte Zahnstange. Das linienförmige Antriebsmittel kann auch als Lochband ausgeführt sein.

Bei der neuen Fensterrolloanordnung können entweder für die erste oder für die zweite Rollobahn, je nachdem welche als erste angesehen wird, zwei linienförmige Antriebsmittel vorhanden sein.

Die linienförmigen Antriebsmittel können so gestaltet sein, dass sie beim Ausfahren des Rollos auf Druck belastet werden.

Zum Führen des Zugstabs kann diesem wenigstens eine Führungsschiene zugeordnet sein.

Die Führungsschiene kann zur ausknicksicheren Führung des zugeordneten linienförmigen Antriebsmittels eingerichtet sein.

Der ersten und/oder der zweiten Wickelwelle kann ein Federmotor zugeordnet sein.

Die lose drehbare Zahnradanordnung kann von einem einzigen Zahnrad gebildet sein, oder aber von einer Zahnradanordnung, die zwei drehfest miteinander gekuppelte Zahnräder umfasst. Jedes der beiden Zahnräder ist mit einem der linienförmigen Antriebsmittel gekuppelt.

Das Zahnrad mit dem kleinsten Durchmesser kann mit jenem linienförmigen Antriebsmittel gekuppelt sein das die Rollobahn mit dem kleineren Hub betätigt.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Figuren entnehmen, die insoweit die Figurenbeschreibung ergänzen. Es ist klar dass eine Reihe von Abwandlungen möglich sind.

Die nachfolgenden Figuren sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" sowie "links" und "rechts" beziehen sich auf die normale Einbaulage bzw. die Terminologie bei Kraftfahrzeugen.

In der Zeichnung ist ein Ausführungsbeispiel des Gegenstandes der Erfindung dargestellt.
- Fig. 1: zeigt den aufgebrochenen Fondbereich eines Pkw un- ter Veranschaulichung des rechten Seitenfensters.
- Fig. 2: veranschaulicht in einer schematischen Darstellung das Antriebskonzept des erfindungsgemäßen Fenster- rollos.

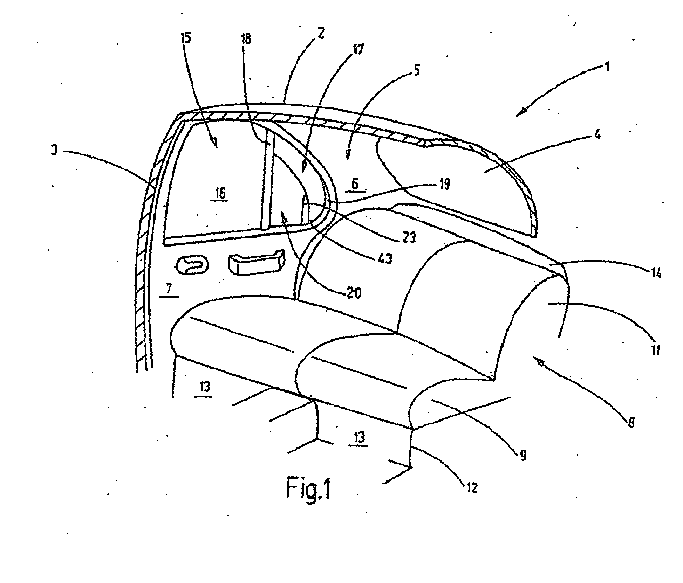

Fig. 1 stellt den aufgebrochen abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifungen und Befestigungsmittel, nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule trägt eine Innenverkleidung 6.

Zwischen der B-Säule und der C-Säule ist an der B-Säule eine hintere rechte Seitentür in der bekannten Weise anscharniert.

Auf der Höhe der hinteren rechten Seitentür befindet sich eine Rücksitzbank 8 zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf Höhe der Oberkante der Rücksitzlehne 11 erstreckt sich eine Hutablage 14 zu der Unterkante der Heckscheibe 4.

Die hintere rechte Seitentür 7 ist in der für Limousinen üblichen Weise mit einem Seitenfenster 15 versehen. Das Seitenfenster 15 gliedert sich in einen ersten Fensterabschnitt 16 sowie einen hinteren zweiten Fensterabschnitt 17. Der erste Fensterabschnitt 16 hat eine im Wesentlichen rechteckige Gestalt und wird nach hinten von einer Führungssäule 18 begrenzt, die gleichzeitig eine Kante des zweiten Fensterabschnitts 17 darstellt. Der zweite Fensterabschnitt 17 wird gegenüber der Führungssäule 18 von einem Türrahmen 19 begrenzt, der zusammen mit der Führungssäule 17 die Gestalt des zweiten Fensterabschnitts 16 festlegt. Er ist, wie dargestellt, etwa dreieckförmig.

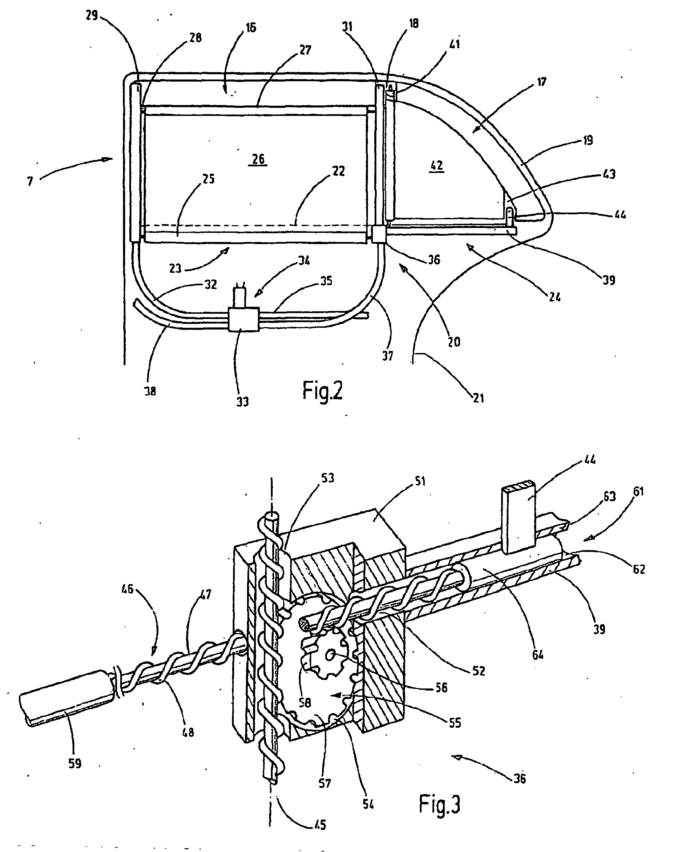

Dem Fenster 15 ist ein Seitenfensterrollo 20 zugeordnet. Der prinzipielle Aufbau des Seitenfensterrollos 20 ist in Fig. 2 im Einzelnen gezeigt.

Figur 2 zeigt die Tür 7 stark schematisiert ohne Innenverkleidung. Zu erkennen ist ein Türkorpus 21, über dem sich der Fensterrahmen 19 erhebt. Der Türkorpus 21 endet an einer Fensterunterkante 22.

Das Teilrollo 23 dient der Abschattung des rechteckigen Bereiches 16 während das Fensterrollo 24 zur Abschattung des dreieckförmigen Abschnittes 17 dient.

Zu dem Fensterrollo 23 gehört eine Wickelwelle 25, die unterhalb der Fensterunterkante 2 in dem Türkorpus 21 gelagert ist. Die Wickelwelle 25 liegt parallel zur Fensterunterkante. An der Wickelwelle 25 ist eine Rollobahn 26 mit einer Kante befestigt, deren andere Kante 27 an einem Zugstab 28 befestigt ist. Im Inneren der wickelwelle 25 befindet sich ein an sich bekannter Federmotor, der dazu eingerichtet ist, die Wickelwelle im Sinne des Aufwicklns der Rollobahn 26 auf die Wickelwelle 25 vorzuspannen.

Der Zugstab 28 ist in zwei seitlichen Führungsschienen 29 und 31 geführt. Die Führungsschienen 29 und 31 laufen neben den seitlichen vertikalen Fensterkanten des Fensterabschnitt 16. Das heißt die Führungsschiene 29 befindet sich im linken vertikalen Abschnitt des Fensterrahmens 19 während die Führungsschiene 31 in der Führungsrolle 18 untergebracht ist.

Beide Führungsschienen 29, 31 reichen bis unter die Fensterunterkante 22 bis in die Türzarge 21 hinein. Am unteren Ende der Führungsschiene 29 schließt sich ein Führungsrohr 32 an, das zu einem Getriebegehäuse 33 eines Getrieberotors 34 führt. Mit dem Führungsrohr 32 fluchtet auf der anderen Seite des Getriebegehäuses 33 ein Speicherrohr 35.

An die Führungsschiene 31 ist an der Unterseite ein Zwischengetriebe 36 angeschlossen, dessen Aufbau in Verbindung mit Figur 3 erläutert wird.

Von dem Zwischengetriebe 36 führt ein Führungsrohr 37 zu dem Getriebegehäuse 33 des Antriebsgetriebemotors 34. Auf der gegenüberliegenden Seite fluchtet mit dem Führungsrohr 37 ein Speicherrohr 38.

Zu dem Fensterrollo 24 gehört ein unterhalb der Fehnsterunterkante 22 angeordnete Führungsschiene 39, die von dem Zwischengetriebe 36 ausgeht.

Neben der Führungsschiene 31 ist auf der Führungssäule 19 eine weitere Wickelwelle 41 drehbar gelagert, an der mit einer Kante eine dreieckförmige Rollobahn 42 befestigt ist. Die Wickelwelle 41 enthält einen an sich bekannten Federmotor ähnlich wie die Wickelwelle 25, um die Wickelwelle 41 mit einem Drehsinn vorzuspannen, der bestrebt ist, die Rollobahn 42 auf die Wickelwelle 41 aufzuwickeln. An der Spitze der Rollobahn 42 befindet sich ein kleines Konturteil 43, das an einem Arm 44 befestigt ist, der in die Führungsschiene 39 hinein ragt.

Figur 3 zeigt schematisiert, in einer perspektivischen Schnittdarstellung, den Aufbau des Zwischengetriebes 36.

Die geführten linienförmigen Schubgliedern in Gestalt von rundum verzahnten flexiblen Zahnstangen. Von diesen Schubglieder sind in Figur 3 die beiden Zugglieder 45 und 46 zu erkennen. Ein weiteres gleich aufgebautes Schubglied bewegt sich durch das Führungsrohr 32 und verbindet den Getriebemotor 34 mit dem linken Ende der Zugstange 28, die das in der Führungsschiene 29 geführt ist.

Jedes der beiden Zugglieder 45 und 46 besteht aus einer zylindrischen Seele 47, um die sich schraubenförmig eine Rippe 48 herum windet, die mit der Seele 47 fest verbunden ist. Dazu entsteht eine Art rundum verzahnte flexible Zahnstange. Mit Hilfe der Rippe 48 kann eine Schub- oder Druckkraft auf die Seele 47 übertragen werden.

Das Zwischengetriebe 36 weist ein Gehäuse 51 auf, dass zwei rechtwinklige zueinander verlaufende Durchgangsbohrungen 52 und 53 enthält. Die beiden Durchgangsbohrungen 52 und 53 sind seitlich gegeneinander versetzt, so dass sie einander nicht schneiden. Der Durchmesser der Durchgangsbohrungen 52 und 53 entspricht dem Außendurchmesser der Schubglieder 45, 46 gemäß über der Scheitellinie der Rippe 48.

Im Bereich der Innenecke, die von den beiden Durchgangsbohrungen 52 und 53 gebildet ist, befindet sich eine Kammer 54, in der eine Zahnradanordnung auf einer Achse 56 drehbar gelagert ist. Die Achse 56 steht senkrecht auf zwei zueinander parallele Ebenen, von denen die eine die Achse der Durchgangsbohrung 52 und die andere die Achse der Durchgangsbohrung 53 enthält.

Die Zahnradanordnung 55 enthält ein großes Zahnrad 57 sowie ein kleineres Zahnrad 58. Beide Zahnräder 57 und 58 sind Stirnzahnräder und mit eiern Verzahnung auf der Außenumfangsfläche versehen, so das sich mit der Rippe 58 der 45 bzw. 46 kämmen können. Die beiden Zahnräder 57 und 58 sind koaxial drehfest miteinander verbunden. Die Achse 56 ist so gelegen, dass die Zahnradstirn des groOen Zahnrads 57 in die Durchgangsbohrung 53 eintaucht, um dort, wie gezeigt, mit der Schubglied 45 in Eingriff zu kommen. Außerdem ist die Achse 56 so gelegen, dass das kleinere Zahnrad 58 in die Durchgangsbohrung 52 eintauchen kann damit die Zahnradstirn des Stirnzahnrades 58 mit dem Schubglied 46 formschlüssig klemmen kann.

In Verlängerung der Durchgangsbohrung 52 ist nach hinten die Führungsschiene 39 angeschlossen, während in der entgegengesetzten Richtung ein Speicherrohr 59 angeschlossen ist, dass das Leertrum des Schubglieds 46 aufnimmt.

Die Führungsschiene 39 enthält eine Führungsnut 61. Der Querschnitt der Führungsnut 61 setzt sich aus einer zylindrischen Führungskammer 62 und einen rechteckigen Schlitz 63 zusammen, dessen Weite kleiner ist als der Durchmesser der Nutenkammer 62. Dadurch entsteht eine hinterschnittene Führungsnut 61, in der ein Gleitstein 64 geführt ist, mit dem der Arm 44 verbunden ist. Die Weite des Schlitzes 63 entspricht der Dicke des Armes 44.

An das Getriebegehäuse 51 schließt sich in Verlängerung der geraden Durchgangsbohrung 53 nach oben die Führungsschiene 31 und nach unten das Führungsrohr 37 an. Die Führungsschiene 31 sowie die Führungsschiene 29 haben dasselbe Querschnittsprofil hinsichtlich der Führungsnut, wie diese im Zusammenhang mit der Führungsnut 61 der Führungsschiene 39 erläutert ist.

Die Funktionsweise des beschriebenen Seitenfensterrollos ist wie folgt:

Im eingefahrenen Zustand sind die beiden Rollobahnen 26 und 42 unter Wirkung der Federmotoren auf die zugehörige Wickelwelle 25, 41 aufgewickelt. Dies ist möglich, weil die Schubglieder die in den Führungsschienen 29 und 31 laufen, d.h. das Schubglied 45 und das dem Schubglied 45 entsprechende Schubglied in der Führungsschiene 29 weitgehend zurückgezogen sind, wobei das Leertrum in dem jeweiligen Speicherrohren 35, 38 aufgenommen ist.

Außerdem ist das Schubglied 46 aus der Führungsschiene 39 zurückgezogen, so dass auch hier das Aufwickeln der Rollobahn 42 auf die Wickelwelle 41 von dem Schubglied 41 nicht behindert wird.

Wenn der Benutzer ausgehend von der eingefahrenen Stellung das Rollo ausfahren will, setzt ein nicht gezeigter Schalter den Getriebemotor 34 in Gang. Dieser treibt ein Zahnrad an, das mit dem Schubgliedern für das Fensterrollo 23 kämmend in Eingriff steht. Es zieht die zugehörigen Schubglieder aus den Speicherrohren 35 und 38 heraus und schiebt sie in Richtung auf das obere Ende der Führungsschienen 28 und 31 vor. Dabei drücken die beiden Schubglieder, nämlich das Schubglied 45 in dem in der Führungsschiene 31 und das Schubglied in der Führungsschiene 29, den Auszugsstab 28 vor sich her nach oben, wodurch die Rollobahn 26 gegen die Wirkung des Federmotors von der Wickelwelle 25 abgewickelt wird.

Auf eine Darstellung des Schubglieds in der Führungsschiene 29 kann verzichtet werden. Dieses Schubglied entspricht in seinem Aufbau dem Schubglied 45 aus Figur 3.

Die Antriebsbewegung zum Ausfahren der rollobahn 42 wird aus der Bewegung des Schubglieds 45 abgeleitet, dass das rechte oder hintere Ende des Zugstabs 28 des Fensterrollos 23 antreibt. Durch die Aufwärtsbewegung des Schubglieds 45 beim Ausfahren der Rollobahn 26 wird die zahnradanordnung 55 im Uhrzeigersinn in Umdrehung versetzt. Die Drehbewegung ist schlupffrei, weil das Zahnrad 57 formschlüssig mit der Rippe 48 des Schubglieds 45 in Eingriff steht.

Da die beiden Zahnräder 57 und 58 drehfest miteinander verbunden sind, wird auch gleichzeitig das Zahnrad 58 im Uhrzeigersinn im Umdrehung versetzt und schiebt somit das Schubglied 46 bezogen auf Figur 3 nach rechts nahe an das Schubglied 46 oberhalb des zahnrads 58 verläuft. Die Vorschubbewegung des Schubglieds 46 bezogen auf Figur 3 nach rechts, d.h. im Fahrzeug nach hinten bewegt den Gleitstein 54 zum hinteren Ende der Tür und nimmt über den Arm 44 das Konturteil 43 der Rollobahn 42 mit, um die rollobahn 42 vor dem dreieckförmigen Fenster 17 aufzuspannen.

Das Einfahren geschieht sinngemäß in der umgekehrten Richtung. Der Benutzer setzt den Getriebemotor 34 mit der entgegengesetzten Drehbewegung in Gang, wodurch die Schubglieder aus den beiden Führungsschienen 29 und 31 zurückgezogen werden. Die Abwärtsbewegung des Druckglieds 45 dreht die Zahnradanordnung 55 im gegenuhrzeigersinn was dazu führt, dass das Schubglied 46 aus der Führungsschiene 39 zurückgezogen wird. Die Federmotoren in den Wickelwellen 25 und 41 können die zugehörigen Rollobahnen 26 und 62 auswickeln in dem Maße, indem diese die Schubglieder zulassen.

Wie die schematische Darstellung in Figur 2 erkennen lässt, muss der Getriebemotor 34 innerhalb des Türkorpus 21 an einer Stelle untergebracht werden, an der Platz hierfür besteht. Innerhalb des Türkorpus befinden sich nämlich noch weitere Einbauten, wie Lautsprecher, Türschlösser, Fernbedienungen für Türschlösser und ein Fensterhebermotor mit .... der zugehörigen Mechanik sowie Lüftungsauslässe. Demzufolge ist auch die Verlegung der Führungsrohre 32 und 37 wesentlich komplizierter als es die schematisch Darstellung von Figur 2 erkennen lässt, da die Führungsrohre 32 und 37 sich um die entsprechende Hindernisse herum schlängeln müssen.

Sinngemäß das Gleiche gilt für die Speicherrohre 35 und 38, die ebenfalls zwischen den Einbauten innerhalb des Türkorpus 21 sich hindurch winden müssen.

Je stärker die Führungsrohre oder Speicherrohre für die Schubglieder gekrümmt und gewunden verlaufen, um so größer wird der Reibungsverlust darin. Im Gegensatz zum Stand der Technik wird für den Antrieb des dreieckförmuigen hinteren Rollos 24 nicht etwa ein weiteres Führungsrohr verwendet, das die Führungsschiene 39 mit dem Getriebemotor 34 verbindet. Ein solches Führungsrohr muss z-förmig oder s-förmig gebogen werden und erzeugt entsprechend sehr viel Reibung. Bei der Erfindung wird statt dessen die Bewegung für das Schubglied 46 aus der Bewegung des Schubglieds 45 abgeleitet, womit es möglich wird, die Antriebsquelle für das Schubglied 46 in Gestalt des Zwischengetriebes 51 an einer Stelle zu platzieren, die ein praktisch gestreckten Verlauf des Schubglieds 46 ermöglicht. Das Schubglied 46 läuft gerade in die Führungsschiene 39 ein und auch das Speicherrohr 59 das das Leertrum des Schubglieds 46 aufnimmt, kann in gerader Richtung unterhalb der Fensterunterkante 22 verlaufend angeordnet sein. Die Reibung, die das Schubglied 46 in der Führungsschiene 39 bzw. dem Speicherrohr 59 erfährt, wird dadurch minimal.

Die Verminderung der Reibungskräfte bei dem Schubglied 46 zum Antrieb des dreieckförmigen hinteren Fensterrollos 24 bringt auch den Vorteil mit sich, dass der Einklemmschutz besser zu realisieren ist. Der Einklemmschutz wird in der Regel dadurch erreicht, dass der Strom für den Motor im Ausfahrbetrieb überwacht wird. Je höher die Reibungsverluste sind, um so größer ist der Motorstrom auch bei ordnungsgemäß laufendem Rollo, so dass eine Differenzierung zwischen frei laufendem Rollo und eingeklemmten Körperteilen schwierig wird. Wenn hingegen die Reibung klein ist, ist der Einklemmschutz mit Hilfe einer Stromüberwachung leichter zu bewerkstelligen.

Wie für den Fachmann unschwer zu erkennen ist, sind die beiden Zahnräder 57 und 58 in ihrem Wirkdurchmesser so bemessen, dass sie dem unterschiedlichen Hub der Rollobahn 26 im Verhältnis zur Rollobahn 42 Rechnung tragen.

Eine Seitenfensterrollo für ein Kraftfahrzeug setzt sich aus zwei Rollos zusammen. Das eine Teilrollo wird zum Abschatten des dreieckförmigen Bereiches verwendet und das andere zum Abschatten des viereckförmigen Bereich. Zum Ausfahren der Rollobahn werden ausknicksicher geführte Schubglieder verwendet. Die Bewegung des Schubglieds für das dreieckförmige Rollo wird aus der Bewegung des benachbarten Schubglieds für das rechteckige Rollo abgeleitet. Dadurch werden komplizierte verlegte Führungsrohre für das Schubglied des dreieckförmigen Rollos vermieden.

## Patentansprüche

1. Fensterrolloanordnung für Kraftfahrezuge
mit einer ersten Wickelwelle (25,41), die drehbar gelagert ist,
mit einer ersten Rollobahn (26), die an der ersten Wickelwelle (25) befestigt und mit einem ersten Zugstab (27) verbunden ist,
mit einer Antriebseinrichtung (34), die ein Antriebszahnrad aufweist,
mit wenigstens einem ersten linienförmige Antriebsmittel (45), das das Ausgangszahnrad der Antriebseinrichtung (34) mit dem ersten Zugstab (27) verbindet,
mit einer zweiten Wickelwelle (41), die drehbar gelagert ist, mit einer zweiten Rollobahn (42), die an der zweiten Wickelwelle (41) befestigt und mit einem zweiten Zugstab (43) verbunden ist,
**gekennzeichnet durch** eine lose drehbare Zahnradanordnung (55), die mit dem ersten linienförmigen Antriebsmittel (45) formschlüssig kämmend in Eingriff steht, und
wenigstens ein zweites linienförmiges Antriebsmittel (46), das mit der lose drehbaren Zahnradanordnung (55) formschlüssig kämmend in Eingriff steht, um die lose drehbare Zahnradanordnung (55) mit der zweiten Rollobahn (42) zu kuppeln.

2. Fensterrolloanordnung nach Anspruch 1, **dadurch gekennzeichnet, dass** sie für ein geteiltes Seitenfenster (15) dimensioniert ist.

3. Fensterrolloanordnung nach Anspruch 1, **dadurch gekennzeichnet, dass** die beiden Wickelwellen (25,41) im Winkel zueinander angeordnet sind.

4. Fensterrolloanordnung nach Anspruch 1, **dadurch gekennzeichnet, dass** die Antriebseinrichtung (34) einen Getriebemotor umfasst, wobei das Antriebszahnrad mit der Ausgangswelle des Getriebemotors gekuppelt ist oder auf dieser sitzt.

5. Fensterrolloanordnung nach Anspruch 1, **dadurch gekennzeichnet, dass** das erste und/oder das zweite linienförmige Antriebsmittel (45,46) die Gestalt einer Zahnstange hat.

6. Fensterrolloanordnung nach Anspruch 1, **dadurch gekennzeichnet, dass** das erste und/oder das zweite linienförmige Antriebsmittel (45,46) die Gestalt einer rundumverzahnten Zahnstange hat.

7. Fensterrolloanordnung nach Anspruch 1, **dadurch gekennzeichnet, dass** das erste und/oder das zweite linienförmige Antriebsmittel (45,46) ein Lochband ist.

8. Fensterrolloanordnung nach Anspruch 1, **dadurch gekennzeichnet, dass** es zwei erste linienförmige Antriebsmittel (45) gibt.

9. Fensterrolloanordnung nach Anspruch 1, **dadurch gekennzeichnet, dass** die linienförmigen Antriebsmittel (45, 46) beim Ausfahren des Rollos auf Druck belastet sind.

10. Fensterrolloanordnung nach Anspruch 1, **dadurch gekennzeichnet, dass** die linienförmigen Antriebsmittel (45,46), zumindest abschnittsweise, ausknicksicher geführt sind.

11. Fensterrolloanordnung nach Anspruch 1, **dadurch gekennzeichnet, dass** dem ersten und/oder dem zweiten Zugstab (27,43) wenigstens eine Führungsschiene (29,32,39) zugeordnet ist.

12. Fensterrolloanordnung nach Anspruch 11, **dadurch gekennzeichnet, dass** die Führungsschiene (29,32,39) der ausknicksicheren Führung des zugeordneten linienförmigen Antriebsmittels (45,46) dient.

13. Fensterrolloanordnung nach Anspruch 1, **dadurch gekennzeichnet, dass** die erste und/oder die zweite wickelwelle (25,41) über einen zugeordneten Federmotor antreibbar sind.

14. Fensterrolloanordnung nach Anspruch 1, **dadurch gekennzeichnet, dass** die lose drehbare Zahnradanordnung (55) von einem einzigen Zahnrad gebildet ist.

15. Fensterrolloanordnung nach Anspruch 1, **dadurch gekennzeichnet, dass** die lose drehbare Zahnradanordnung (55) zwei drehfest miteinander gekuppelte Zahnräder (57,58) aufweist, von denen das eine Zahnrad (57,58) mit dem einen linienförmigen Antriebsmittel (45,46) und das andere Zahnrad (57,58) mit dem anderen linienförmigen Antriebsmittel (45,46) gekuppelt ist.

16. Fensterrolloanordnung nach Anspruch 15, **dadurch gekennzeichnet, dass** das Zahnrad (58) mit dem kleineren Durchmesser mit jenem linienförmigen Antriebsmittel (46) gekuppelt ist, dass die Rollobahn (42) mit dem kleineren Hub betätigt.

## Claims

1. Window roller blind arrangement for motor vehicles
with a first winding shaft (25, 41), which is rotatably mounted,
with a first blind sheet (26), which is fastened to the first winding shaft (25) and is connected to a first pull rod (27),
with a drive means (34), which has a drive gear wheel,
with at least one first linear drive element (45), which connects the output gear wheel of the drive means (34) to the first pull rod (27),
with a second winding shaft (41), which is rotatably mounted,
with a second blind sheet (42), which is fastened to the second winding shaft (41) and is connected to a second pull rod (43),
**characterised by** a loose rotatable gear wheel arrangement (55), which meshes positively with the first linear drive elements (45), and
at least one second linear drive element (46), which meshes positively with the loose rotatable gear wheel arrangement (55) in order to couple the loose rotatable gear wheel arrangement (55) to the second blind sheet (42).

2. Window roller blind arrangement according to claim 1, **characterised in that** it is dimensioned for a divided side window (15).

3. Window roller blind arrangement according to claim 1, **characterised in that** the two winding shafts (25, 41) are arranged at an angle to one another.

4. Window roller blind arrangement according to claim 1, **characterised in that** the drive means (34) comprises a geared motor, wherein the drive gear wheel is coupled to the output shaft of the geared motor or sits thereon.

5. Window roller blind arrangement according to claim 1, **characterised in that** the first and/or the second linear drive element (45, 46) has the structure of a toothed rack.

6. Window roller blind arrangement according to claim 1, **characterised in that** the first and/or the second linear drive element (45, 46) has the structure of a toothed rack with full tooth system.

7. Window roller blind arrangement according to claim 1, **characterised in that** the first and/or the second linear drive element (45, 46) is a perforated band.

8. Window roller blind arrangement according to claim 1, **characterised in that** there are two first linear drive elements (45).

9. Window roller blind arrangement according to claim 1, **characterised in that** the linear drive elements (45, 46) are subjected to pressure when the roller blind is extended.

10. Window roller blind arrangement according to claim 1, **characterised in that** the linear drive elements (45, 46) are guided, at least in sections, in a buckle-resistant manner.

11. Window roller blind arrangement according to claim 1, **characterised in that** the first and/or the second pull rod (27, 43) has at least one associated guide rail (29, 32, 39).

12. Window roller blind arrangement according to claim 11, **characterised in that** the guide rail (29, 32, 39) serves to guide the associated linear drive element (45, 46) in a buckle-resistant manner.

13. Window roller blind arrangement according to claim 1, **characterised in that** the first and/or the second winding shaft (25, 41) can be driven by means of an associated spring motor.

14. Window roller blind arrangement according to claim 1, **characterised in that** the loose rotatable gear wheel arrangement (55) is formed by a single gear wheel.

15. Window roller blind arrangement according to claim 1, **characterised in that** the loose rotatable gear wheel arrangement (55) has two gear wheels (57, 58), which are coupled to one another to be fixed against rotation and of which one gear wheel (57, 58) is coupled to one linear drive element (45, 46) and the other gear wheel (57, 58) is coupled to the other linear drive element (45, 46).

16. Window roller blind arrangement according to claim 15, **characterised in that** the gear wheel (58) with the smaller diameter is coupled to the linear drive element (46), which actuates the blind sheet (42) with a smaller stroke.

## Revendications

1. Agencement de store de fenêtre pour véhicules automobiles,
comprenant un premier arbre d'enroulement (25, 41) qui est monté tournant,
comprenant une première bande de store (26) qui est fixée au premier arbre d'enroulement (25) et est reliée à une première barre de traction (27),
comprenant un dispositif d'entraînement (34) qui présente une roue dentée motrice,
comprenant au moins un premier moyen d'entraînement (45) linéaire qui relie la roue dentée de sortie du dispositif d'entraînement (34) à la première barre de traction (27)
comprenant un deuxième arbre d'enroulement (41) qui est monté tournant,
comprenant une deuxième bande de store (42) qui est fixée au deuxième arbre d'enroulement (41) et est reliée à une deuxième barre de traction (43),
**caractérisé par le fait qu'**il comporte un agencement de roues dentées (55) pouvant tourner librement, qui est en prise avec le premier moyen d'entraînement (45) linéaire, en engrenant par complémentarité de formes avec celui-ci, et
**par le fait qu'**il comporte au moins un deuxième moyen d'entraînement (46) linéaire qui engrène par complémentarité de formes avec l'agencement de roues dentées (55) pouvant tourner librement, en vue d'accoupler ledit agencement (55), tournant librement, avec la deuxième bande de store (42).

2. Agencement de store de fenêtre selon la revendication 1, **caractérisé par le fait qu'**il est dimensionné pour une fenêtre latérale (15) divisée.

3. Agencement de store de fenêtre selon la revendication 1, **caractérisé par le fait que** les deux arbres d'enroulement (25, 41) sont disposés en formant un angle l'un avec l'autre.

4. Agencement de store de fenêtre selon la revendication 1, **caractérisé par le fait que** le dispositif d'entraînement (34) comprend un motoréducteur, la roue dentée motrice étant accouplée avec l'arbre de sortie du motoréducteur ou étant montée sur celui-ci.

5. Agencement de store de fenêtre selon la revendication 1, **caractérisé par le fait que** le premier et/ou le deuxième moyen d'entraînement (45, 46) linéaire se présente sous la forme d'une crémaillère.

6. Agencement de store de fenêtre selon la revendication 1, **caractérisé par le fait que** le premier et/ou le deuxième moyen d'entraînement (45, 46) linéaire se présente sous la forme d'une crémaillère dotée d'une denture sur tout le pourtour.

7. Agencement de store de fenêtre selon la revendication 1, **caractérisé par le fait que** le premier et/ou le deuxième moyen d'entraînement (45, 46) linéaire se présente sous la forme d'une bande perforée.

8. Agencement de store de fenêtre selon la revendication 1, **caractérisé par le fait qu'**il y a deux premiers moyens d'entraînement (45) linéaires)

9. Agencement de store de fenêtre selon la revendication 1, **caractérisé par le fait que** les moyens d'entraînement (45, 46) linéaires sont sollicités en compression lors du déroulement du store.

10. Agencement de store de fenêtre selon la revendication 1, **caractérisé par le fait que** les moyens d'entraînement (45, 46) linéaires sont guidés, au moins par portions, de manière à résister au flambage.

11. Agencement de store de fenêtre selon la revendication 1, **caractérisé par le fait qu'**au moins un rail de guidage (29, 32, 39) est associé à la première et/ou à la deuxième barre de traction (27, 43).

12. Agencement de store de fenêtre selon la revendication 11, **caractérisé par le fait que** le rail de guidage (29, 32, 39) sert au guidage, avec résistance au flambage, du moyen d'entraînement (45, 46) linéaire associé.

13. Agencement de store de fenêtre selon la revendication 1, **caractérisé par le fait que** le premier et/ou le deuxième arbre d'enroulement (25, 41) peut être entraîné par l'intermédiaire d'un moteur à ressort associé.

14. Agencement de store de fenêtre selon la revendication 1, **caractérisé par le fait que** l'agencement de roues dentées (55) tournant librement est formé d'une seule roue dentée.

15. Agencement de store de fenêtre selon la revendication 1, **caractérisé par le fait que** l'agencement de roues dentées (55) tournant librement présente deux roues dentées (57, 58) accouplées l'une avec l'autre de façon solidaire en rotation, dont une roue dentée (57, 58) est accouplée avec un moyen d'entraînement (45, 46) linéaire et l'autre roue dentée (57, 58) est accouplée avec l'autre moyen d'entraînement (45, 46) linéaire.

16. Agencement de store de fenêtre selon la revendication 15, **caractérisé par le fait que** la roue dentée (58) de plus petit diamètre est accouplée avec le moyen d'entraînement (46) linéaire qui actionne la bande de store (42) avec la plus petite course.
